# EUROPEAN PATENT SPECIFICATION

(11) **EP 2 490 137 B1**
(45) Date of publication and mention of the grant of the patent: **30.08.2017**
(21) Application number: 12153143.8
(22) Date of filing: 30.01.2012
(51) Int. Cl.: G06F 17/30

(54) **Apparatus and Method for Managing Content Data in Portable Terminal**
Vorrichtung und Verfahren zur Verwaltung von Inhaltsdaten in einem tragbaren Endgerät
Appareil et procédé pour la gestion des données de contenu dans un terminal portable

(30) Priority: 21.02.2011 KR 20110014994
(43) Date of publication of application: 22.08.2012
(73) Proprietor: Samsung Electronics Co., Ltd., Suwon-si, Gyeonggi-do, 443-742 (KR)
(72) Inventor: Park, Soo-Hong, Gyeonggi-do (KR); Jeong, Jin-Guk, Gyeonggi-do (KR); Shim, Hyun-Sik, Gyeonggi-do (KR); Lee, Woo-Yong, Gyeonggi-do (KR); Park, Kwang-Kyu, Gyeonggi-do (KR)
(74) Representative: HGF Limited

(56) References cited:
- US-A1- 2005 235 015
- US-A1- 2006 004 698

## Description

### TECHNICAL FIELD

The present disclosure relates to an apparatus and method for managing content data of a portable terminal. More particularly, the present disclosure is directed to allowing the portable terminal to be able to determine a user's preference on content data by assigning the preference on the content data to data information such as meta-data.

### BACKGROUND

Portable terminals have become necessities of modem life for people of all ages. Thus, service providers and terminal manufacturers are competitively developing differentiated products and services.

For example, the portable terminal has developed into a multimedia device capable of providing various services such as phonebooks, games, short messages, e-mails, wake-up calls, MPEG-1 Audio Layer 3 (MP3) players, scheduling, digital cameras, multimedia messages, and wireless Internet.

The portable terminal generates a plurality of pieces of content data by using the aforementioned services. The content data is data that can be stored in the portable terminal itself or in a peripheral device. Examples of the content data include image data, video data, multimedia data, bell sound data, message data, and text data. The portable terminal generates the image data by using a digital camera function, and generates the audio data by using a recording function. In addition, the portable terminal generates the text data by using a memo function.

According to the aforementioned functions, a large amount of content data is generated in the portable terminal. A user of the portable terminal manages the generated content data by storing the data into a folder desired by the user.

In general, the user of the portable terminal manages the content data by storing the generated content data and, if it is determined that the stored data is not necessary, by deleting the content data.

If the user of the portable terminal does not store the generated content in a specific storage folder, the user cannot determine the existence of the generated content data. For example, when the user of the portable terminal generates important content data and thus needs to store the data into a specific folder, if a process of storing the data into the specific folder is skipped when the content data is generated, it may be difficult or impossible to manage the important content due to a large amount of content data.

In order to solve the aforementioned problem, there is a need for an apparatus and method for managing content data in such a manner that a user's preference and an importance are assigned to content data generated in the portable terminal and then the content data is managed according to the assigned preference or importance.

US-2006/004698-A1 discloses a method for automated prioritization of user data files. User data files for electronic images and/or other types of information are stored in a server coupled to a display such as a television set and having interfaces with one or more communication networks. Priorities of individual user data files are modified based on prior activity regarding those files. File activities affecting priority can include enlarging an image, editing an image and copying an image to another folder. When the user views an array of thumbnail images, thumbnail images are only displayed for user data files meeting a priority threshold. The user can adjust the priority threshold so as to increase or decrease the number of thumbnail images shown.

US-2005/235015-A1 discloses a technology for facilitating a user-configurable model for managing synchronization, transfer, or copying of one or more subsets of a collection of digital data items between source and target computing systems.

### SUMMARY

To address the above-discussed deficiencies of the prior art, it is an aim of certain embodiments of the invention to provide at least some of the advantages described below. Accordingly, it is an aim of certain embodiments of the present disclosure to provide an apparatus and method for improving management capability of content data in a portable terminal.

Another aim of certain embodiments of the present disclosure is to provide an apparatus and method for assigning a preference on content data in a portable terminal.

Another aim of certain embodiments of the present disclosure is to provide an apparatus and method for managing content data according to an assigned preference in a portable terminal.

Another aim of certain embodiments of the present disclosure is to provide an apparatus and method for generating meta-data including preference information in a portable terminal.

In accordance with a first aspect of the present disclosure, there is provided an apparatus for managing content data in a portable terminal, the content data being generated in the portable terminal, the apparatus comprising: a preference manager configured to: receive an input regarding a preference corresponding to the generated content data; assign the preference on the generated content data by appending metadata to the content data, the metadata including a field for indicating the preference; a content manager configured to: determine whether a storage folder corresponding to the assigned preference for the content data exists; if the storage folder does not exist, generate a storage folder corresponding to the preference to store the content data and store the content data with the appended metadata in the generated storage folder; and if the storage folder exists, store the content data with the appended metadata in the determined storage folder; and determine a transmission priority for the content data based on the metadata for indicating the preference; and a controller configured to control the transmission of the content data to a peripheral device according to the determined transmission priority such that the content data of the generated or determined storage folder is transmitted prior to content data of a general folder to which a preference is not assigned.

In accordance with a second aspect of the present disclosure, there is provided a method for managing content data in a portable terminal, the content data being generated in the portable terminal, the method comprising: receiving an input regarding a preference corresponding to the generated content data; assigning the preference on the generated content data by appending metadata to the content data, the metadata including a field for indicating the preference; determining whether a storage folder corresponding to the assigned preference for the content data exists; if the storage folder does not exist, generating a storage folder corresponding to the preference to store the content data and storing the content data with the appended metadata in the generated storage folder; and if the storage folder exists, storing the content data with the appended metadata in the determined storage folder; determining a transmission priority for the content data based on the metadata for indicating the preference; and transmitting the content data to a peripheral device according to the determined transmission priority such that the content data of the generated or determined storage folder is transmitted prior to content data of a general folder to which a preference is not assigned.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates a structure of a portable terminal for assigning a preference on content data according to an embodiment of the present disclosure;
FIGURE 2 illustrates a process of appending preference information to content data in a portable terminal according to an embodiment of the present disclosure;
FIGURE 3 illustrates a process of storing data to which a preference is assigned in a portable terminal according to an embodiment of the present disclosure;
FIGURE 4 illustrates a process of transmitting data to which a preference is assigned in a portable terminal according to an embodiment of the present disclosure;
FIGURE 5 illustrates a structure of data information for assigning a preference on content data according to an embodiment of the present disclosure;
FIGURE 6A illustrates a screen for outputting a preference item of acquired image data in a portable terminal according to an embodiment of the present disclosure;
FIGURE 6B illustrates a screen for storing image data to which a preference is assigned in a portable terminal according to an embodiment of the present disclosure; and
FIGURE 7 illustrates a process of transmitting pre-stored image data in a portable terminal according to an embodiment of the present disclosure.

Throughout the drawings, like reference numerals will be understood to refer to like parts, components and structures.

### DETAILED DESCRIPTION OF THE INVENTION

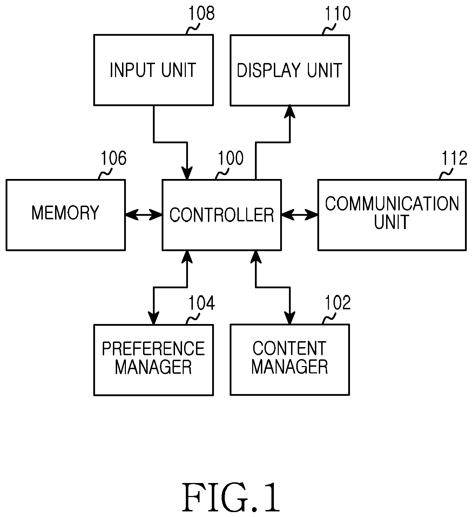

FIGURES 1 through 7, discussed below, and the various embodiments used to describe the principles of the present disclosure in this patent document are by way of illustration only and should not be construed in any way to limit the scope of the disclosure.

Exemplary embodiments of the present disclosure will be described herein below with reference to the accompanying drawings. In the following description, well-known functions or constructions are not described in detail since they would obscure the disclosure in unnecessary detail.

The present disclosure described hereinafter relates to an apparatus and method in which a preference on content data is assigned in a portable terminal and then the content data is managed according to the assigned preference. Hereinafter, content data denotes data that can be stored in the portable terminal itself or a peripheral device, and examples of the content data include image data, video data, multimedia data, bell sound data, and message data. The portable terminal denotes a terminal that can be connected to the peripheral device, and examples of the portable terminal include a digital camera, a mobile communication terminal, a digital camcorder, a personal computer, a laptop, a printer, and the like.

FIGURE 1 illustrates a structure of a portable terminal for assigning a preference on content data according to an embodiment of the present disclosure.

Referring to FIGURE 1, the portable terminal includes a controller 100, a content manager 102, a preference manager 104, a memory 106, an input unit 108, a display unit 110, and a communication unit 112.

The controller 100 of the portable terminal provides overall control to the portable terminal. For example, the controller 100 processes and controls voice telephony and data communication. In addition to typical functions, a user's preference on pre-stored content data or newly acquired content data is assigned under the control of the controller 100. Herein, the user's preference is a storage and transmission priority on the content data. The controller 100 provides control to manage the content data according to the pre-assigned preference. For example, under the control of the controller 100, a folder corresponding to the preference is generated to store the content data or the transmission priority corresponding to the preference is assigned to transmit the content data to a peripheral device according to the assigned transmission priority.

The content manager 102 manages the pre-stored content data under the control of the controller 100. That is, the content manager 102 stores the acquired content data or transmits the data to the peripheral device. In addition thereto, the content manager 102 can analyze data information (e.g., meta-data) on the pre-stored content data to determine a storage folder and transmission priority of the content data, and can store the acquired content data into the determined storage folder or can transmit the acquired content data to the peripheral device according to the determined transmission priority.

The preference manager 104 assigns a user's preference on the acquired content data under the control of the controller 100. That is, upon detection of a request for assigning the preference on the acquired content data, the preference manager 104 outputs a preference item that can be assigned to the content data, and then a user selects the preference item to be assigned.

Thereafter, the preference manager 104 generates and stores data information that indicates the preference selected by the user. Herein, the preference manager 104 can generate the data information by appending a field that indicates the preference item to meta-data of the content data.

As described above, the data information generated by the preference manager 104 is used to determine the transmission priority and the storage folder of the acquired content data.

The memory 106 includes a Read Only Memory (ROM), a Random Access Memory (RAM), and a flash ROM. The ROM stores a microcode of a program, by which the controller 100, the content manager 102, and the preference manager 104 are processed and controlled, and a variety of reference data.

The RAM is a working memory of the controller 100 and stores temporary data that is generated while programs are executed. The flash ROM stores a variety of rewritable data, such as phonebook entries, outgoing messages, incoming messages, and information of a user's touch input point. In addition, the memory 106 stores data information including information on the preference assigned by the user according to the present disclosure.

The input unit 108 includes a plurality of function keys such as numeral key buttons of '0' to '9', a menu button, a cancel button, an OK button, a talk button, an end button, an Internet access button, a navigation key (or direction key) button, and a character input key. Key input data, which is input when the user presses these keys, is provided to the controller 100. According to the present disclosure, input data regarding the preference on the content data can be generated.

The display unit 110 displays information such as state information, which is generated while the portable terminal operates, one or more characters, moving and still pictures, and the like. The display unit 110 may be a color Liquid Crystal Display (LCD), an Active Matrix Organic Light Emitting Diode (AMOLED), and the like. The display unit 110 may include a touch input device as an input device when using a touch input type portable terminal.

The communication unit 112 transmits and receives a Radio Frequency (RF) signal of data that is input and output through an antenna (not illustrated). For example, in a transmitting process, data to be transmitted is subject to a channel-coding process and a spreading process, and then the data is transformed to an RF signal. In a receiving process, the RF signal is received and transformed to a base-band signal, and the base-band signal is subject to a despreading process and a channel-decoding process, thereby restoring the data.

Although a function of the content manager 102 and the preference manager 104 can be performed by the controller 100 of the portable terminal, they are separately constructed in the present disclosure for exemplary purposes only. Thus, those ordinary skilled in the art can understand that various modifications can be made within the scope of the present disclosure. For example, functions of all of these elements can be processed by the controller 100.

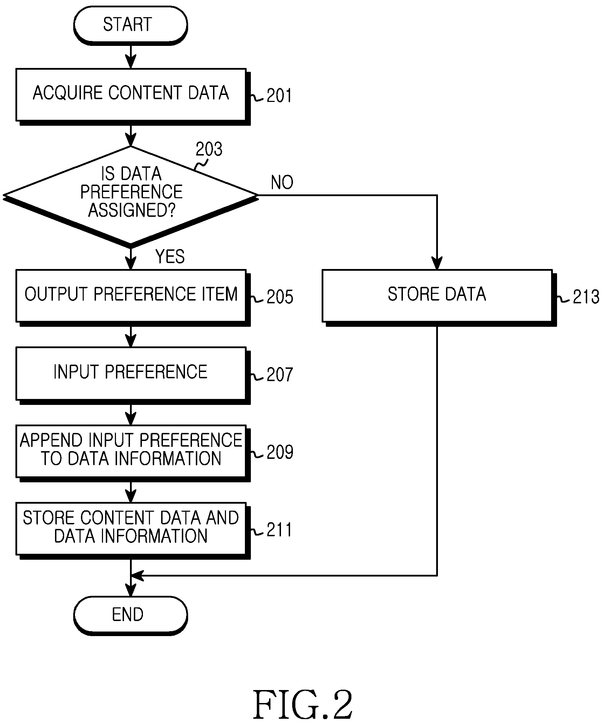

FIGURE 2 illustrates a process of appending preference information to content data in a portable terminal according to an embodiment of the present disclosure.

Referring to FIGURE 2, the content data denotes data that can be stored in the portable terminal itself or in a peripheral device. Examples of the content data include image data, video data, multimedia data, bell sound data, message data, and text data.

The portable terminal acquires content data in block 201, and then determines whether a request for assigning a preference on the acquired content data is detected in block 203. Herein, the acquiring of the content data may be equivalent to loading of content data stored in the portable terminal or acquiring of content data by using the portable terminal (e.g., capturing of image data, capturing of video data, storing of games, generating of data, and so forth). The preference on the content data may be a priority on data transmission and data storage with respect to the pre-stored content data or the acquired content data, or may be a user's preference on the content data.

If the request for assigning the data preference is not detected in block 203, proceeding to block 213, the portable terminal stores the content data acquired in block 201. For example, if image data is acquired by using a camera module, the portable terminal performs a typical operation process for storing the acquired data into a storage area (e.g., a photo box) for storing image data.

Otherwise, if the request for assigning data preference is detected in block 203, proceeding to block 205, the portable terminal outputs one or more preference options (e.g., a first priority, a second priority, and so forth) that can be assigned to content data to which the preference is intended to be assigned. In block 207, a user inputs any one of the preferences included in the output preference options.

In block 209, the portable terminal performs a process of appending the preference input in block 207 to data information. In this situation, according to the embodiment of the present disclosure, the portable terminal appends the preference to the data information as meta-data that indicates attribute information of the content data. That is, the portable terminal assigns the preference on the content by using some fields of the meta-data as a field for indicating the preference information.

In block 211, the portable terminal stores the content data acquired in block 201 and the data information in which the preference on the content data is assigned. In this situation, the portable terminal can store the content data by classifying the data according to the preference. For example, if a first-priority preference is assigned to image data acquired by the portable terminal, the portable terminal can generate a folder corresponding to 'first priority' in a photo box and thus can identify and store data corresponding to the first-priority preference. Data in the folder which is assigned to the first-priority preference can be transmitted preferentially when communicating with a peripheral device.

Thereafter, the procedure of FIGURE 2 ends.

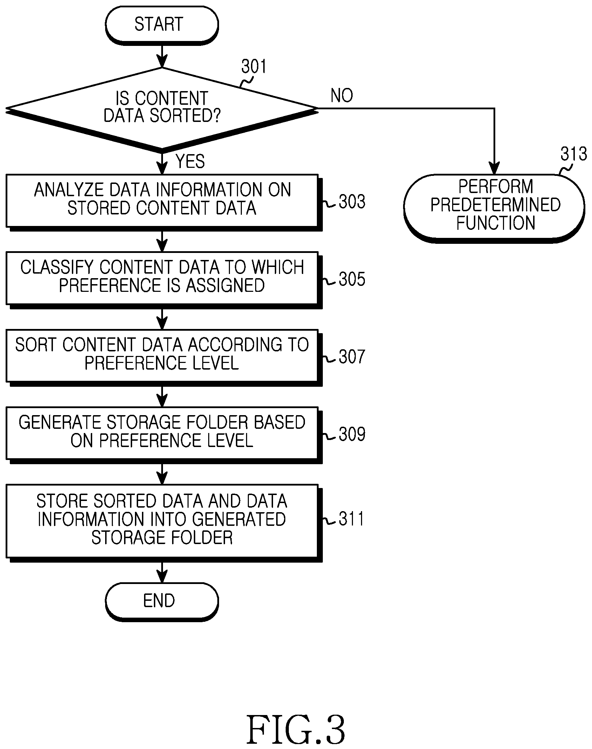

FIGURE 3 illustrates a process of storing data to which a preference is assigned in a portable terminal according to an embodiment of the present disclosure.

Referring to FIGURE 3, the portable terminal determines whether to sort content data in block 301. Herein, the sorting of the content data may include sorting of data stored in the portable terminal according to a preference or classifying data to which the preference is assigned and data to which the preference is not assigned.

If it is determined in block 301 that the content data is not sorted, proceeding to block 313, the portable terminal performs a predetermined function (e.g., a standby mode).

Otherwise, if it is determined in block 301 that the content data is sorted, proceeding to block 303, the portable terminal confirms and analyzes data information on the stored content data. Herein, the data information may be meta-data of pre-stored content data. The portable terminal determines whether to assign the preference by confirming a field that indicates preference information of the data information.

In block 305, the portable terminal classifies content data to which the preference is assigned among the pre-stored content data by using the data information analyzed in block 303.

In block 307, the portable terminal sorts the content data, to which the preference is assigned, according to a preference level and thus classifies the content data, to which the preference is assigned, according to a priority. That is, the portable terminal classifies content data corresponding to first-priority, second-priority, and third-priority preferences.

In block 309, the portable terminal generates a folder for storing the content data classified as data having the priority. If the content data is sorted by the first priority (i.e., high priority) and the second priority (i.e., intermediate priority) in block 307, the portable terminal generates a folder corresponding to the first priority and the second priority in block 309.

In block 311, the portable terminal stores the sorted content data into the generated folder. In this situation, the portable terminal also stores meta-information which is data information of the content data stored in the generated folder. In addition, the portable terminal can also classify and store content data to which the preference is not assigned.

Accordingly, a user of the portable terminal can classify and output the content data to which the preference is assigned.

Thereafter, the procedure of FIGURE 3 ends.

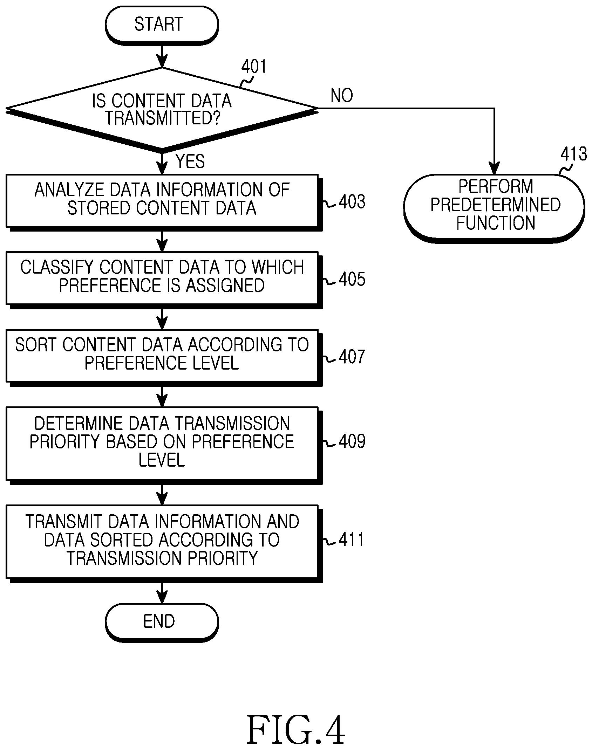

FIGURE 4 illustrates a process of transmitting data to which a preference is assigned in a portable terminal according to an embodiment of the present disclosure.

Referring to FIGURE 4, the portable terminal determines whether to transmit content data in block 401. Herein, transmitting of the content data includes transmitting content data stored in the portable terminal to a peripheral device (e.g., a printer, a laptop, a television, and the like) or backing up the content data.

If it is determined in block 401 that the content data is not transmitted, proceeding to block 413, the portable terminal performs a predetermined function (e.g., a standby mode).

Otherwise, if it is determined in block 401 that the content data is transmitted, proceeding to block 403, the portable terminal analyzes data information corresponding to the stored content data. Herein, the data information is meta-data that indicates attribute information of pre-stored content data, and a specific field of the data information indicates a preference on the content data.

In block 405, the portable terminal classifies content data to which the preference is assigned among the pre-stored content data by using the data information analyzed in block 403.

In block 407, the portable terminal sorts the content data, to which the preference is assigned, according to a preference level and thus classifies the content data, to which the preference is assigned, according to a priority.

In block 409, the portable terminal determines a data transmission priority of the content data classified according to the priority. If the content data is sorted by first priority (i.e., high priority) and second priority (i.e., intermediate priority) in block 407, proceeding to block 409, the portable terminal transmits first-priority content data at a top priority and transmits second-priority content data at a next priority.

In block 411, the portable terminal transmits content data sorted according to the determined data priority and data information corresponding to the content data.

Thereafter, the procedure of FIGURE 4 ends.

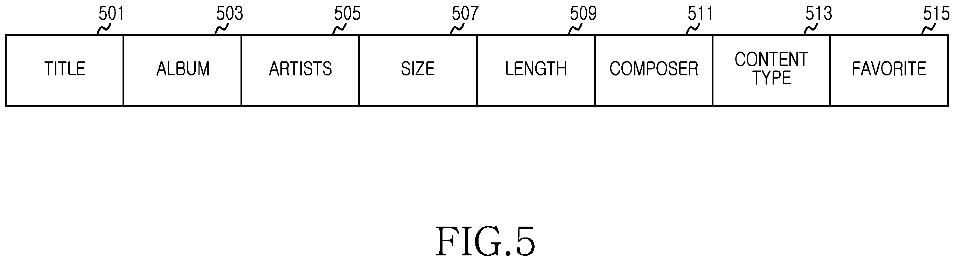

FIGURE 5 illustrates a structure of data information for assigning a preference on content data according to an embodiment of the present disclosure.

Referring to FIGURE 5, the data information is described by taking meta-data that indicates an attribute of audio content, for example. As illustrated, the meta-data of the audio content includes information on a title 501, an album 503, an artist 505, a size 507, a length 509, a composer 511, and a content type 513. The meta-data having the aforementioned structure is meta-data of typical audio content. According to the present disclosure, the meta-data further includes a favorite 515.

The favorite 515 indicates a user's preference on content data according to the present disclosure, and is used to determine a storage folder and a transmission priority. In this situation, the data information including the favorite 515 is generated and stored per content data.

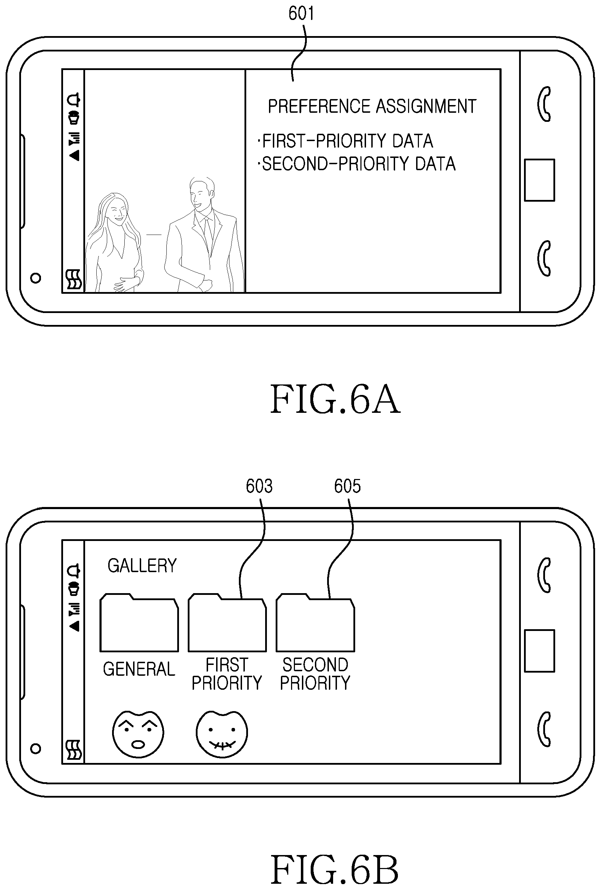

FIGURES 6A and 6B illustrate a screen for assigning a preference on image data in a portable terminal according to an embodiment of the present disclosure.

FIGURE 6A illustrates a screen for outputting a preference item of acquired image data in a portable terminal according to an embodiment of the present disclosure.

Referring to FIGURE 6A, the portable terminal can output the acquired image data by loading image data acquired by capturing an object or pre-stored image data, and then can assign a preference on the image data according to a user's request.

First, a user of the portable terminal performs a process of assigning a preference on image data by selecting a preference assignment menu in a state where the acquired image is output.

When the preference assignment process is performed as described above, the portable terminal outputs a preference item 601 that can be assigned to the image data. That is, as illustrated, the portable terminal outputs the preference item that can indicate first-priority data and second-priority data, and then the user selects a preference item to be assigned.

For example, if the user of the portable terminal selects a preference item that indicates first-priority data, the portable terminal determines that the acquired image has a first priority and thus assigns a first-priority preference to meta-data of the image.

FIGURE 6B illustrates a screen for storing image data to which a preference is assigned in a portable terminal according to an embodiment of the present disclosure.

Referring to FIGURE 6B, the portable terminal classifies and stores an acquired image according to the preference.

That is, the portable terminal generates a general folder and a folder based on the preference, and stores image data. For example, the portable terminal stores image data to which the preference is assigned into the general folder and stores image data corresponding to the first-priority preference into a first-priority folder 603. In addition, the portable terminal stores image data based on a second-priority preference into a second-priority folder 605, and thus can identify the preference of the pre-stored image data.

Accordingly, a user of the portable terminal can classify and output content data to which the preference is assigned.

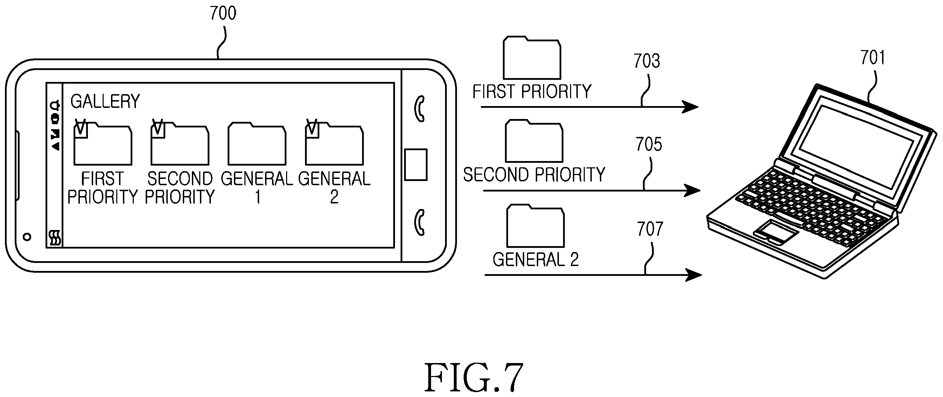

FIGURE 7 illustrates a process of transmitting pre-stored image data in a portable terminal according to an embodiment of the present disclosure.

Referring to FIGURE 7, a portable terminal 700 stores image data to which a preference is assigned and image data to which the preference is not assigned. In addition, the portable terminal 700 generates a folder corresponding to the image data and then stores the image data into a corresponding folder. Accordingly, the image data stored in the folder based on the preference is image data having the same preference. That is, all pieces of image data stored in a folder corresponding to the first-priority preference have a first-priority preference.

When a user of the portable terminal 700 intends to transmit the image image data stored in the folder, the user selects a folder corresponding to a preference on image data to be transmitted. The folder selected by the user is checked with a mark 'v', which can indicate a user's intention for transmitting image data to which the preference is assigned and which is stored in a folder corresponding to the first-priority preference and the second-priority preference and image data to which the preference is not assigned and which is stored in a second general folder.

When selecting a folder corresponding to a preference on image data to be transmitted, the portable terminal 700 transmits data of the selected folder to a peripheral device 701. In this situation, the portable terminal 700 can determine a transmission priority of image data by using a pre-assigned preference according to the embodiment of the present disclosure.

That is, as illustrated, the portable terminal 700 transmits image data stored in a folder having a first-priority preference (as indicated by a reference numeral 703), and then transmits image data stored in a folder having a second-priority preference to the peripheral device 701 (as indicated by a reference numeral 705). After transmitting the image data to which the preference is assigned as described above, the portable terminal 700 transmits image data of the second general folder to which a preference is not assigned to the peripheral device 701 (as indicated by a reference numeral 707).

That is, the portable terminal of the present disclosure can assign a preference on acquired content data, and then can determine a transmission priority and a sorting rule for the content data by confirming the assigned preference.

Accordingly, pre-stored content data can be classified based on a preference, then can be stored by grouping the content data on the basis of the preference, and then can be transmitted to a neighboring terminal by assigning a top priority to content having a high preference.

According to exemplary embodiments of the present disclosure, management capability of content data can be improved in a portable terminal. A preference on the content data is assigned, and thereafter the content data is managed based on the assigned preference, thereby being able to confirm a user's preference on the content data.

While the present disclosure has been particularly shown and described with reference to exemplary embodiments thereof, it will be understood by those skilled in the art that various changes in form and details may be made therein without departing from the scope of the present disclosure as defined by the appended claims.

## Claims

1. An apparatus for managing content data in a portable terminal, the content data being generated in the portable terminal, the apparatus comprising:
a preference manager (104) configured to:
receive (207) an input regarding a preference corresponding to the generated content data;
assign the preference on the generated content data by appending metadata to the content data, the metadata including a field for indicating the preference;
a content manager (102) configured to:
determine whether a storage folder corresponding to the assigned preference for the content data exists;
if the storage folder does not exist, generate (211) a storage folder corresponding to the preference to store the content data and store the content data with the appended metadata in the generated storage folder; and
if the storage folder exists, store (211) the content data with the appended metadata in the determined storage folder; and
determine (409) a transmission priority for the content data based on the metadata for indicating the preference; and
a controller (100) configured to control the transmission (411) of the content data to a peripheral device according to the determined transmission priority such that the content data of the generated or determined storage folder is transmitted prior to content data of a general folder to which a preference is not assigned.

2. The apparatus of claim 1, wherein the metadata includes a plurality of fields indicating attributes of the content data.

3. The apparatus of claim 1, wherein when determining (409) the transmission priority on the content data, the content manager (102) is further configured to:
acquire and analyze (403) the metadata appended to the content data;
classify (405) using the analyzed metadata the content data to which the preference is assigned; and
determine (409) a transmission priority of the classified content data to transmit the content data according to the field for indicating the preference included in the metadata.

4. The apparatus of claim 3, wherein when transmitting (411) the content data according to the transmission priority, the content manager (102) is further configured to transmit the metadata appended to the content to be transmitted.

5. A method for managing content data in a portable terminal, the content data being generated in the portable terminal, the method comprising:
receiving (207) an input regarding a preference corresponding to the generated content data;
assigning the preference on the generated content data by appending metadata to the content data, the metadata including a field for indicating the preference;
determining whether a storage folder corresponding to the assigned preference for the content data exists;
if the storage folder does not exist, generating (211) a storage folder corresponding to the preference to store the content data and storing the content data with the appended metadata in the generated storage folder; and
if the storage folder exists, storing (211) the content data with the appended metadata in the determined storage folder;
determining (409) a transmission priority for the content data based on the metadata for indicating the preference; and
transmitting (411) the content data to a peripheral device according to the determined transmission priority such that the content data of the generated or determined storage folder is transmitted prior to content data of a general folder to which a preference is not assigned.

6. The method of claim 5, wherein the metadata includes a plurality of fields indicating attributes of the content data.

7. The method of claim 5, wherein determining (409) a transmission priority on the content data comprises:
acquiring and analyzing (403) the metadata appended to the content data;
classifying (405) using the analyzed metadata the content data to which the preference is assigned; and
determining (409) a transmission priority of the classified content data to transmit the content data according to the field for indicating the preference included in the metadata.

8. The method of claim 7, wherein transmitting (411) the content data according to the determined transmission priority comprises transmitting the metadata appended to the content to be transmitted.

## Patentansprüche

1. Eine Vorrichtung zur Verwaltung von Inhaltsdaten in einem tragbaren Endgerät, wobei die Inhaltsdaten im tragbaren Endgerät generiert werden, wobei die Vorrichtung umfasst:
Einen Präferenz-Manager (104), der konfiguriert ist, Folgendes zu tun:
Empfangen (207) einer Eingabe bezüglich einer Präferenz, die den generierten Inhaltsdaten entspricht;
Zuordnen der Präferenz auf die generierten Inhaltsdaten durch Anhängen von Metadaten an die Inhaltsdaten, wobei die Metadaten ein Feld zum Anzeigen der Präferenz einschließen;
einen Inhalts-Manager (102), der konfiguriert ist, Folgendes zu tun:
Ermitteln, ob ein Speicherordner, welcher der zugeordneten Präferenz für die Inhaltsdaten entspricht, existiert;
falls der Speicherordner nicht existiert, Generieren (211) eines Speicherordners, welcher der Präferenz entspricht, um die Inhaltsdaten zu speichern und die Inhaltsdaten mit den angehängten Metadaten im generierten Speicherordner zu speichern; und
falls der Speicherordner existiert, Speichern (211) der Inhaltsdaten mit den angehängten Metadaten im ermittelten Speicherordner; und
Ermitteln (409) einer Übertragungspriorität für die Inhaltsdaten auf der Basis der Metadaten zur Anzeige der Präferenz;
und eine Steuereinheit (100), die konfiguriert ist, die Übertragung (411) der Inhaltsdaten an eine periphere Vorrichtung gemäß der ermittelten Übertragungspriorität, derart zu steuern, dass die Inhaltsdaten des generierten oder ermittelten Speicherordners vor den Inhaltsdaten eines allgemeinen Ordners übertragen werden, dem keine Präferenz zugeordnet ist.

2. Die Vorrichtung nach Anspruch 1, wobei die Metadaten eine Vielzahl von Feldern einschließen, die Attribute der Inhaltsdaten anzeigen.

3. Die Vorrichtung nach Anspruch 1, wobei beim Ermitteln (409) der Übertragungspriorität bei den Inhaltsdaten, der Inhalts-Manager (102) ferner konfiguriert ist, Folgendes zu tun:
Erfassen und Analysieren (403) der an die Inhaltsdaten angehängten Metadaten;
Klassifizieren (405), unter Verwendung der analysierten Metadaten, der Inhaltsdaten, denen die Präferenz zugeordnet ist; und
Ermitteln (409) einer Übertragungspriorität der klassifizierten Inhaltsdaten, um die Inhaltsdaten gemäß dem Feld zum Anzeigen der Präferenz zu senden, die in den Metadaten inbegriffen ist.

4. Die Vorrichtung nach Anspruch 3, wobei beim Senden (411) der Inhaltsdaten gemäß der Übertragungspriorität, der Inhalts-Manager (102) ferner konfiguriert ist, die Metadaten zu senden, die dem zu sendenden Inhalt angehängt sind.

5. Ein Verfahren zur Verwaltung von Inhaltsdaten in einem tragbaren Endgerät, wobei die Inhaltsdaten im tragbaren Endgerät generiert werden, wobei das Verfahren umfasst:
Empfangen (207) einer Eingabe bezüglich einer Präferenz, die den generierten Inhaltsdaten entspricht;
Zuordnen der Präferenz auf die generierten Inhaltsdaten durch Anhängen von Metadaten an die Inhaltsdaten, wobei die Metadaten ein Feld zum Anzeigen der Präferenz einschließen;
Ermitteln, ob ein Speicherordner, welcher der zugeordneten Präferenz für die Inhaltsdaten entspricht, existiert;
falls der Speicherordner nicht existiert, Generieren (211) eines Speicherordners, welcher der Präferenz entspricht, um die Inhaltsdaten zu speichern, und Speichern der Inhaltsdaten mit den angehängten Metadaten im generierten Speicherordner; und
falls der Speicherordner existiert, Speichern (211) der Inhaltsdaten mit den angehängten Metadaten im ermittelten Speicherordner;
Ermitteln (409) einer Übertragungspriorität für die Inhaltsdaten auf der Basis der Metadaten zur Anzeige der Präferenz; und
Senden (411) der Inhaltsdaten an eine periphere Vorrichtung gemäß der ermittelten Übertragungspriorität, derart, dass die Inhaltsdaten des generierten oder ermittelten Speicherordners vor den Inhaltsdaten eines allgemeinen Ordners übertragen werden, dem keine Präferenz zugeordnet ist.

6. Das Verfahren nach Anspruch 5, wobei die Metadaten eine Vielzahl von Feldern einschließen, die Attribute der Inhaltsdaten anzeigen.

7. Das Verfahren nach Anspruch 5, wobei das Ermitteln (409) einer Übertragungspriorität bei den Inhaltsdaten umfasst:
Erfassen und Analysieren (403) der an die Inhaltsdaten angehängten Metadaten;
Klassifizieren (405), unter Verwendung der analysierten Metadaten, der Inhaltsdaten, denen die Präferenz zugeordnet ist; und
Ermitteln (409) einer Übertragungspriorität der klassifizierten Inhaltsdaten, um die Inhaltsdaten gemäß dem Feld zum Anzeigen der Präferenz zu senden, die in den Metadaten inbegriffen ist.

8. Das Verfahren nach Anspruch 7, wobei das Senden (411) der Inhaltsdaten gemäß der ermittelten Übertragungspriorität das Senden der Metadaten umfasst, die dem zu senden Inhalt angehängt sind.

## Revendications

1. Un appareil de gestion de données de contenu dans un terminal portatif, les données de contenu étant générées dans le terminal portatif, l'appareil comprenant :
un gestionnaire de préférences (104) configuré de façon à :
recevoir (207) une entrée concernant une préférence correspondant aux données de contenu générées,
attribuer la préférence aux données de contenu générées par l'ajout de métadonnées aux données de contenu, les métadonnées comprenant un champ destiné à l'indication de la préférence,
un gestionnaire de contenus (102) configuré de façon à :
déterminer si un dossier d'espace mémoire correspondant à la préférence attribuée pour les données de contenu existe,
si le dossier d'espace mémoire n'existe pas, générer (211) un dossier d'espace mémoire correspondant à la préférence de façon à conserver en mémoire les données de contenu et conserver en mémoire les données de contenu avec les métadonnées ajoutées dans le dossier d'espace mémoire généré, et
si le dossier d'espace mémoire existe, conserver en mémoire (211) les données de contenu avec les métadonnées ajoutées dans le dossier d'espace mémoire déterminé, et
déterminer (409) une priorité de transmission pour les données de contenu en fonction des métadonnées destinées à l'indication de la préférence, et
un dispositif de commande (100) configuré de façon à commander la transmission (411) des données de contenu vers un dispositif périphérique en fonction de la priorité de transmission déterminée de sorte que les données de contenu du dossier d'espace mémoire généré ou déterminé soient transmises avant des données de contenu d'un dossier général auxquelles une préférence n'est pas attribuée.

2. L'appareil selon la Revendication 1, où les métadonnées comprennent une pluralité de champs indiquant des attributs des données de contenu.

3. L'appareil selon la Revendication 1, où, lors de la détermination (409) de la priorité de transmission pour les données de contenu, le gestionnaire de contenus (102) est configuré en outre de façon à :
acquérir et analyser (403) les métadonnées ajoutées aux données de contenu,
classer (405) au moyen des métadonnées analysées les données de contenu auxquelles la préférence est attribuée, et
déterminer (409) une priorité de transmission des données de contenu classées de façon à transmettre les données de contenu en fonction du champ destiné à l'indication de la préférence inclus dans les métadonnées.

4. L'appareil selon la Revendication 3, où, lors de la transmission (411) des données de contenu en fonction de la priorité de transmission, le gestionnaire de contenus (102) est configuré en outre de façon à transmettre les métadonnées ajoutées aux contenus à transmettre.

5. Un procédé de gestion de données de contenu dans un terminal portatif, les données de contenu étant générées dans le terminal portatif, le procédé comprenant :
la réception (207) d'une entrée concernant une préférence correspondant aux données de contenu générées,
l'attribution de la préférence aux données de contenu générées par l'ajout de métadonnées aux données de contenu, les métadonnées comprenant un champ destiné à l'indication de la préférence,
la détermination si un dossier d'espace mémoire correspondant à la préférence attribuée pour les données de contenu existe,
si le dossier d'espace mémoire n'existe pas, la génération (211) d'un dossier d'espace mémoire correspondant à la préférence destiné à la conservation en mémoire des données de contenu et la conservation en mémoire des données de contenu avec les métadonnées ajoutées dans le dossier d'espace mémoire généré, et
si le dossier d'espace mémoire existe, la conservation en mémoire (211) des données de contenu avec les métadonnées ajoutées dans le dossier d'espace mémoire déterminé,
la détermination (409) d'une priorité de transmission pour les données de contenu en fonction des métadonnées destinées à l'indication de la préférence, et
la transmission (411) des données de contenu vers un dispositif périphérique en fonction de la priorité de transmission déterminée de sorte que les données de contenu du dossier d'espace mémoire généré ou déterminé soient transmises avant des données de contenu d'un dossier général auxquelles une préférence n'est pas attribuée.

6. Le procédé selon la Revendication 5, où les métadonnées comprennent une pluralité de champs indiquant des attributs des données de contenu.

7. Le procédé selon la Revendication 5, où la détermination (409) d'une priorité de transmission pour les données de contenu comprend :
l'acquisition et l'analyse (403) des métadonnées ajoutées aux données de contenu,
le classement (405) au moyen des métadonnées analysées des données de contenu auxquelles la préférence est attribuée, et
la détermination (409) d'une priorité de transmission des données de contenu classées de façon à transmettre les données de contenu en fonction du champ destiné à l'indication de la préférence inclus dans les métadonnées.

8. Le procédé selon la Revendication 7, où la transmission (411) des données de contenu en fonction de la priorité de transmission déterminée comprend la transmission des métadonnées ajoutées aux contenus à transmettre.
